(19) Europäisches Patentamt
European Patent Office
Office européen des brevets

(11) **EP 2 232 654 B1**

(12) **FASCICULE DE BREVET EUROPEEN**

(45) Date de publication et mention de la délivrance du brevet:
**29.06.2011 Bulletin 2011/26**

(21) Numéro de dépôt: **09703510.9**

(22) Date de dépôt: **15.01.2009**

(51) Int Cl.:
*H01S 3/00* (2006.01)  *H01S 3/067* (2006.01)
*H01S 3/16* (2006.01)

(86) Numéro de dépôt international:
**PCT/FR2009/050056**

(87) Numéro de publication internationale:
**WO 2009/092967 (30.07.2009 Gazette 2009/31)**

(54) **AMPLIFICATEUR A FIBRE A DERIVE DE FREQUENCE A COMPENSATION NON LINEAIRE**

FREQUENZDRIFT-FASERVERSTÄRKER MIT NICHT LINEARER KOMPENSATION

FREQUENCY-DRIFT FIBRE AMPLIFIER WITH NONLINEAR COMPENSATION

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **16.01.2008 FR 0850269**

(43) Date de publication de la demande:
**29.09.2010 Bulletin 2010/39**

(73) Titulaire: **Amplitude Systemes**
**33600 Pessac (FR)**

(72) Inventeurs:
• **ZAOUTER, Yoann**
**F-75004 Paris (FR)**
• **MOTTAY, Eric**
**F-33130 Begles (FR)**

(74) Mandataire: **Michelet, Alain et al**
**Cabinet HARLE et PHELIP**
**14-16, rue Ballu**
**75009 Paris (FR)**

(56) Documents cités:
• KANE S ET AL: "Grism-pair stretcher-compressor system for simultaneous second- and third-order dispersion compensation in chirped-pulse amplification" JOURNAL OF THE OPTICAL SOCIETY OF AMERICA B (OPTICAL PHYSICS) OPT. SOC. AMERICA USA, vol. 14, no. 3, mars 1997 (1997-03), pages 661-665, XP002492617 ISSN: 0740-3224

• WHITE W E ET AL: "COMPENSATION OF HIGHER-ORDER FREQUENCY-DEPENDENT PHASE TERMS IN CHIRPED-PULSE AMPLIFICATION SYSTEMS" OPTICS LETTERS, OSA, OPTICAL SOCIETY OF AMERICA, WASHINGTON, DC, US, vol. 18, no. 16, 15 août 1993 (1993-08-15), pages 1343-1345, XP000384367 ISSN: 0146-9592

• SULLIVAN A ET AL: "PHASE CONTROL FOR PRODUCTION OF HIGH-FIDELITY OTICAL PULSES FOR CHIRPED-PULSE AMPLIFICATION" OPTICS LETTERS, OSA, OPTICAL SOCIETY OF AMERICA, WASHINGTON, DC, US, vol. 20, no. 2, 15 janvier 1995 (1995-01-15), pages 192-194, XP000486645 ISSN: 0146-9592

• KANE S ET AL: "GRATING COMPENSATION OF THIRD-ORDER MATERIAL DISPERSION IN THE NORMAL DISPERSION REGIME: SUB-100-FS CHIRPED-PULSE AMPLIFICATION USING A FIBER STRETCHER AND GRATING-PAIR COMPRESSOR" IEEE JOURNAL OF QUANTUM ELECTRONICS, IEEE SERVICE CENTER, PISCATAWAY, NJ, vol. 31, no. 11, 1 novembre 1995 (1995-11-01), pages 2052-2057, XP000541548 ISSN: 0018-9197

• MIKLOS STERN ET AL: "GRATING COMPENSATION OF THIRD-ORDER FIBER DISPERSION" IEEE JOURNAL OF QUANTUM ELECTRONICS, IEEE SERVICE CENTER, PISCATAWAY, NJ, vol. 28, no. 12, 1 décembre 1992 (1992-12-01), pages 2742-2748, XP000315276 ISSN: 0018-9197

• FORK R L ET AL: "COMPRESSION OF OPTICAL PULSES TO SIX FEMTOSECONDS BY USING CUBIC PHASE COMPENSATION" OPTICS LETTERS, OSA, OPTICAL SOCIETY OF AMERICA, WASHINGTON, DC, US, vol. 12, no. 7, 1 juillet 1987 (1987-07-01), pages 483-485, XP000710543 ISSN: 0146-9592
• LEMOFF B E ET AL: "CUBIC-PHASE-FREE DISPERSION COMPENSATION IN SOLID-STATE ULTRASHORT-PULSE LASERS" OPTICS LETTERS, OSA, OPTICAL SOCIETY OF AMERICA, WASHINGTON, DC, US, vol. 18, no. 1, 1 janvier 1993 (1993-01-01), pages 57-59, XP000328277 ISSN: 0146-9592
• LEMOFF B E ET AL: "QUINTIC-PHASE-LIMITED, SPATIALLY UNIFORM EXPANSION AND RECOMPRESSION OF ULTRASHORT OPTICAL PULSES" OPTICS LETTERS, OSA, OPTICAL SOCIETY OF AMERICA, WASHINGTON, DC, US, vol. 18, no. 19, 1 octobre 1993 (1993-10-01), pages 1651-1653, XP000396952 ISSN: 0146-9592
• STRICKLAND ET AL: "Compression of amplified chirped optical pulses" OPTICS COMMUNICATIONS, NORTH-HOLLAND PUBLISHING CO. AMSTERDAM, NL, vol. 56, no. 3, 1 décembre 1985 (1985-12-01), pages 219-221, XP022570804 ISSN: 0030-4018 cité dans la demande
• LIU Z ET AL: "High energy fiber chirped pulse amplification system based on cubicons" LASERS AND ELECTRO-OPTICS, 2005. (CLEO). CONFERENCE ON BALTIMORE, MD, USA MAY 22-27, 2005, PISCATAWAY, NJ, USA,IEEE, vol. 3, 22 mai 2005 (2005-05-22), pages 1650-1652, XP010876993 ISBN: 978-1-55752-795-0 cité dans la demande
• SHAH L ET AL: "High energy femtosecond Yb cubicon fiber amplifier" OPTICS EXPRESS OPT. SOC. AMERICA USA, vol. 13, no. 12, 13 juin 2005 (2005-06-13), XP002492618 ISSN: 1094-4087 cité dans la demande
• ZHOU S ET AL: "Compensation of nonlinear phase shifts with third-order dispersion in short-pulse fiber amplifiers" OPTICS EXPRESS OPT. SOC. AMERICA USA, vol. 13, no. 13, 27 juin 2005 (2005-06-27), XP002492619 ISSN: 1094-4087 cité dans la demande

• KUZNETSOVA L ET AL: "Scaling of femtosecond Yb-doped fiber amplifiers to tens of microjoule pulse energy via nonlinear chirped pulse amplification" OPTICS LETTERS OPTICAL SOCIETY OF AMERICA USA, vol. 32, no. 18, 15 septembre 2007 (2007-09-15), pages 2671-2673, XP002492620 ISSN: 0146-9592 cité dans la demande
• CHONG A ET AL: "Theoretical optimization of nonlinear chirped-pulse fiber amplifiers" JOURNAL OF THE OPTICAL SOCIETY OF AMERICA B (OPTICAL PHYSICS) OPT. SOC. AMERICA USA, vol. 24, no. 8, août 2007 (2007-08), pages 1815-1823, XP002492621 ISSN: 0740-3224 cité dans la demande
• ZAOUTER Y ET AL: "Third-order spectral phase compensation in parabolic pulse compression" CLEO/EUROPE - IQEC 2007. EUROPEAN CONFERENCE ON LASERS AND ELECTRO-OPTICS AND THE INTERNATIONAL QUANTUM ELECTRONICS CONFERENCE IEEE PISCATAWAY, NJ, USA, 2007, page 681, XP002492622 ISBN: 978-1-4244-0930-3 cité dans la demande
• PAPADOPOULOS D N ET AL: "Generation of 63 fs 4.1 MW peak power pulses from a parabolic fiber amplifier operated beyond the gain bandwidth limit" OPTICS LETTERS OPTICAL SOCIETY OF AMERICA USA, vol. 32, no. 17, 1 septembre 2007 (2007-09-01), pages 2520-2522, XP002492626 ISSN: 0146-9592 cité dans la demande
• ZAOUTER Y ET AL: "Stretcher-free high energy nonlinear amplification of femtosecond pulses in rod-type fibers" OPTICS LETTERS OPTICAL SOCIETY OF AMERICA USA, vol. 33, no. 2, 15 janvier 2008 (2008-01-15), pages 107-109, XP002492627 ISSN: 0146-9592 cité dans la demande

**Description**

La présente invention concerne une source d'impulsions lumineuses ultrabrèves de forte énergie.

Plus particulièrement, l'invention concerne un amplificateur à fibre à dérive de fréquence à compensation non linéaire.

Les fibres optiques dopées Ytterbium sont largement utilisées dans les sources d'impulsions lumineuses ultrabrèves. Elles possèdent de nombreux avantages pour générer et amplifier les impulsions lumineuses ultrabrèves, et se sont imposées comme une alternative séduisante aux systèmes lasers conventionnels. En particulier, elles ont démontré d'excellentes propriétés thermo-optiques, une large bande spectrale de gain (>40 nm), une fluence (énergie divisée par la surface) de saturation élevée, permettant la génération d'impulsions d'énergie de l'ordre du millijoule, et une efficacité de pompage optique élevée (>80%).

En revanche, le confinement de la lumière dans le coeur de la fibre optique, associé à des longueurs de propagation importantes, favorise les effets non linéaires qui détériorent les impulsions lumineuses. Plus précisément, une phase non linéaire s'accumule au cours de la propagation d'impulsions lumineuses de puissance élevée, et cette phase non linéaire donne lieu à un phénomène d'auto-modulation de phase qui modifie la forme des impulsions lumineuses. Or, il est connu que l'amplitude de ces effets non linéaires est d'autant plus important que la puissance crête des impulsions augmente (c'est-à-dire que leur énergie augmente et/ou leur durée diminue). Ceci explique les limitations en énergie des source d'impulsions lumineuses ultrabrèves de forte énergie de l'art antérieur.

Une première approche pour limiter ces effets non linéaires est de répartir l'énergie des impulsions lumineuses en les étirant spatialement et/ou temporellement pour que leur propagation dans la fibre optique amplificatrice s'effectue en régime linéaire.

La première solution est de répartir l'intensité optique des impulsions lumineuses dans l'espace, en utilisant des fibres monomodes de large aire effective, telles que des fibres à double gaine, des fibres à cristaux photoniques à large aire modale, ou bien des fibres photoniques spécifiques de type barreau (cf [1] J. Limpert et al. "High-power rod-type photonic crystal fiber laser," Opt. Express 13, 1055-1058 (2005)). La demande de brevet français N˚0550344 décrit également une fibre optique composite pour laser à confinement d'ondes de pompe et de laser.

Cette solution est associée à une technique d'étirement temporel qui consiste à étirer les impulsions lumineuses temporellement au moyen d'un système optique dispersif, ce qui permet de diminuer la puissance crête de l'impulsion lumineuse, de façon à permettre l'utilisation de l'amplificateur dans le régime linéaire. Après amplification, l'impulsion lumineuse est recomprimée au moyen d'un système optique dispersif symétrique de l'étireur ([2] D. Strickland et al. "Compression of amplified chirped optical pulses," Opt. Comm. 56, 219-221 (1985)). Cette technique est appelée « amplification à dérive de fréquence » (CPA « Chirped-Pulse Amplification »).

Les systèmes amplificateurs à dérive de fréquence (CPA) comprennent généralement les composants suivants :

- un étireur, comprenant un composant optique dispersif,
- un milieu amplificateur, comprenant une section de fibre optique amplificatrice, et
- un compresseur, comprenant un composant optique dispersif.

L'étireur permet d'étirer temporellement l'impulsion lumineuse, avant amplification. La fibre amplificatrice peut alors amplifier l'impulsion étirée dans un régime linéaire. Les impulsions lumineuses amplifiées sont ensuite comprimées par un deuxième système optique dispersif, appelé compresseur. Le compresseur introduit une dispersion exactement opposée à celle de l'étireur, qui permet de comprimer temporellement l'impulsion lumineuse amplifiée, idéalement recomprimée à sa durée initiale.

Les composants optiques dispersifs utilisés dans les étireurs et compresseurs peuvent être un réseau optique de diffraction (diffraction grating), un prisme, un réseau de diffraction en volume ou une section de fibre optique. Une combinaison de plusieurs de ces composants optiques dispersifs peut également être utilisée, comme par exemple une paire de réseaux de diffraction, ou un grism, c'est-à-dire la combinaison de réseaux de diffraction et de prismes.

Les compresseurs de l'art antérieur sont toujours basés sur des réseaux de diffraction, car ces composants à l'état solide supportent mieux l'énergie élevée des impulsions amplifiées. Les étireurs de l'art antérieur sont généralement des étireurs à fibre optique, qui permettent un alignement aisé avec la fibre amplificatrice.

Dans ces systèmes amplificateurs à dérive de fréquence linéaires, la conception vise à limiter la phase non linéaire à des valeurs aussi faibles que possible (souvent inférieure à 1). L'utilisation de cette technique d'amplification à dérive de fréquence linéaire dans le cadre d'amplificateurs à fibre optique a permis la génération d'impulsions lumineuses sub picoseconde avec une énergie de l'ordre du milliJoule et à la génération d'impulsions lumineuses femtoseconde de forte puissance moyenne (de l'ordre de la centaine de Watts). Toutefois, dans ces systèmes, la limitation de la phase non linéaire est obtenue par des facteurs d'étirement très élevés, ce qui entraîne un encombrement considérable de l'étireur.

Toutefois, il existe un besoin pour des sources d'impulsions lumineuses ultra-brèves compactes, d'énergie et de puissance crête et de puissance moyenne plus importante. Il devient alors difficile d'éviter les effets non linéaires qui se produisent lors de la propagation des impulsions lumineuses dans le système amplificateur.

Une deuxième approche consiste à utiliser un amplificateur à dérive de fréquence (CPA) en régime non linéaire et à exploiter les effets non linéaires d'ordre supérieur des différents composants du CPA de manière optimisée, afin d'obtenir des impulsions ultra-brèves et de puissance élevée.

Les effets non linéaires de 2ème et 3ème ordre s'accumulent au cours de la propagation des impulsions lumineuses à travers les divers composants d'un système amplificateur à dérive de fréquence et peuvent avoir plusieurs origines :

- un déphasage non linéaires $\phi$ (non linear phase shift), d'ordre 2 et 3,
- une dispersion de vitesse de groupe ($v_G$), ou de 2ème ordre,
- une dispersion de 3éme ordre (TOD).

Différentes publications ont tenté de définir des sytèmes permettant de compenser les effets non linéaires prépondérants.

Une première façon de compenser certains effets non linéaires est d'utiliser une impulsion dite *Cubicon* de profil spectral asymétrique (obtenue par filtrage spectral) dans un CPA comprenant un étireur à fibre optique et un compresseur à réseau de diffraction. Toutefois le filtrage induit une perte de bande spectrale et limite la compression maximale à des impulsions de l'ordre de 500 fs en sortie du CPA. Voir les publications [3] Z. Liu et al. "High Energy Fiber Chirped Pulse Amplification System based on Cubicons," in Conference on Lasers and Electro-Optics/Quantum Electronics and Laser Science and Photonic Applications Systems Technologies, Technical Digest (CD), Optical Society of America, 2005, paper CThG4 et [4] L. Shah et al. "High energy femtosecond Yb cubicon fiber amplifier," Opt. Express 13, 4717-4722 (2005).)

Une autre solution ne requiert pas des impulsions initiales de forme spectrale asymétrique.

Voir publications suivantes :

[5] S. Zhou et al. "Compensation of nonlinear phase shifts with third-order dispersion in short-pulse fiber amplifiers," Opt. Express 13, 4869-4877 (2005),

[6] L. Kuznetsova et al. "Scaling of femtosecond Yb-doped fiber amplifiers to tens of microjoule pulse energy via nonlinear chirped pulse amplification," Opt. Lett. 32, 2671-2673 (2007), et

[7] A. Chong et al. "Theoretical optimization of nonlinear chirped-pulse fiber amplifiers," J. Opt. Soc. Am. B 24, 1815-1823 (2007).

La publication [5] décrit essentiellement une configuration étireur à fibre, compresseur à réseau, dans laquelle les non-linéarités d'ordre deux et trois dans la fibre compensent celles d'un étireur à fibre (d'une longueur de 400m) et d'un compresseur à réseau de diffraction. Mais pour obtenir cette compensation, le point de fonctionnement utilisé (maximisant la puissance crête) correspond à une phase non linéaire très importante ($17\pi$) dans la fibre amplificatrice.

Or une phase non linéaire importante dans la fibre amplificatrice correspond à un mode de propagation probablement très proche du seuil au-delà duquel d'autres effets non-linéaires comme les effets Raman non linéaires deviennent prépondérants, et absorbent la plus grande partie de l'énergie de l'impulsion. L'amplificateur à fibre optique devient difficile à utiliser dans ces conditions. En outre, il est difficile d'envisager d'utiliser un système basé sur cette structure à des énergies plus importantes, car cela nécessiterait une longueur de fibre pour l'étirement plus grande, induisant une phase non linéaire d'autant plus importante, et des effets Raman plus gênants. Ce dispositif semble donc limité en énergie.

Enfin, une troisième approche consiste à utiliser un régime de propagation parabolique dans la fibre amplificatrice, sans étirer au préalable l'impulsion lumineuse pour compenser la phase spectrale d'ordre 3 ([7] Y. Zaouter et al. "Third-order spectral phase compensation in parabolic pulse compression," Opt. Express 15, 9372-9377 (2007)). Le système décrit dans [7] comporte un oscillateur couplé directement (sans étireur) à un amplificateur à fibre et un compresseur. Les paramètres de l'amplificateur à fibre sont ajustés (énergie et durée des impulsions d'entrée, dispersion, gain, longueur et paramètre non linéaire de la fibre) pour obtenir une convergence des impulsions d'entrée vers un profil parabolique. Le compresseur placé en sortie de la fibre amplificatrice permet de compenser la dérive de fréquence linéaire acquise lors de la propagation de l'impulsion lumineuse.

Toutefois, cette solution de propagation parabolique est expérimentalement limitée par des effets additionnels parasites, tels que la bande de gain finie du milieu amplificateur, ou les effets non linéaires de dispersion d'ordre supérieur.

D'autres expériences (D. Papadopoulos, Y. Zaouter, M. Hanna, F. Druon, E. Mottay, E. Cormier, and P. Georges, "Génération of 63 fs 4.1 MW peak power pulses from a parabolic fiber amplifier operated beyond the gain bandwidth limit," Opt. Lett. 32, 2520-2522 (2007) et Y. Zaouter, D. N. Papadopoulos, M. Hanna, J. Boullet, L. Huang, C. Aguergaray, F. Druon, E. Mottay, P. Georges and E. Cormier, "Stretcher-free high energy nonlinear amplification of femtosecond pulses in rod-type fibers," Opt. Lett. 33, 107-109 (2008)) ont également montré que l'utilisation d'amplificateurs à fibre directement injectés par des impulsions ultracourtes légèrement ou fortement en dehors des conditions optimales pour l'obtention d'impulsions paraboliques permettait également la génération d'impulsions de bonne qualité.

Toutefois, ces expériences ont mis en évidence des limites en énergie au-delà desquelles les effets non-linéaires d'ordres supérieurs nuisent fortement à la qualité des impulsions. L'énergie maximale de l'art antérieur est ainsi limitée à quelques micro-joules ($\mu$J).

La demande de brevet FR 0755798 décrit également une source d'impulsions lumineuses ultrabrèves de forte énergie.

L'objectif de la présente invention est donc de proposer une source d'impulsions lumineuses ultra-brèves à dérive de fréquence et à compensation non-linéaire d'ordre deux et trois pour des impulsions de durée inférieure à la picoseconde, de puissance crête et puissance moyenne élevées, et d'énergie pouvant atteindre quelques microjoule.

La gamme de valeurs de fonctionnement d'un l'amplificateur de l'invention est la suivante :

- la puissance crête de 10 MW à quelques GW
- la puissance moyenne de 1 W à 1 kW
- la durée des impulsions en sortie de 100 fs à 1 ps
- qualité spatiale des impulsions : monomode $TEM_{oo}$.

Le déphasage d'une onde monochromatique de pulsation w après traversée d'un milieu dispersif d'indice n (w) et de longueur L, se caractérise par la valeur :

$$(1.1) \qquad \Phi(\omega) = \beta(\omega).L = n(\omega).\frac{\omega}{c}L$$

où c est la vitesse de la lumière dans le vide.

Le paramètre $\beta(\omega)$ se décompose en série de Taylor selon:

$$(1.2) \qquad \beta(\omega) = n(\omega).\frac{\omega}{c} = \beta_0 + \beta_1.(\omega - \omega_0) + \frac{1}{2}\beta_2.(\omega - \omega_0)^2 + \frac{1}{6}\beta_3.(\omega - \omega_0)^3 + ...$$

avec

$$(1.3) \quad \beta_1 = \frac{d\beta(\omega)}{d\omega}, \quad \beta_2 = \frac{\partial^2\beta(\omega)}{\partial\omega^2}, \quad \beta_3 = \frac{\partial^3\beta(\omega)}{\partial\omega^3},...$$

$\beta_1$ est la vitesse de propagation de l'enveloppe de l'impulsion, $\beta_2$ la dispersion de vitesse de groupe, et $\beta3$ le troisième ordre de dispersion ou TOD (Third Order Dispersion en anglais).

Une impulsion ultrabrève ne peut pas être considérée comme strictement monochromatique. En effet, la durée de l'impulsion est liée à la largeur spectrale par la relation :

$$(1.4) \qquad \Delta\tau.\Delta\nu > k$$

Où $\Delta\tau$ est la largeur temporelle de l'impulsion, $\Delta\nu$ sa largeur spectrale et k une constante.

Une impulsion ultrabrève est donc constituée de différentes composantes spectrales. Elle se représente dans le temps par son intensité I(t), et dans le domaine spectral par son intensité I($\omega$). Après propagation dans un milieu dispersif, chaque composante spectrale voit sa phase modifiée selon la relation de dispersion (1.2).

Les terme $\beta_0$ et $\beta_1$ n'ont pas d'influence significative sur l'impulsion lumineuse ($\beta_1$ correspond par exemple à un décalage temporel global lié à la traversée du milieu). Le terme $\beta_2$, ou dispersion de vitesse de groupe, décrit une propagation différente des différents composantes spectrales de l'impulsion. Le terme $\beta_3$, correspond à une dispersion d'ordre plus élevé et est appelé "dispersion du troisième ordre".

Les termes $\beta_2$ et $\beta_3$ permettent de modéliser les effets non linéaires considérés dans ce document. Les termes supérieurs d'ordre 4 sont par la suite considérés comme négligeables.

Dans le cas d'un amplificateur à dérive de fréquence, l'objectif visé est de conserver après amplification la qualité de la phase spectrale et temporelle des impulsions afin que celles-ci soient compressibles.

Si l'amplificateur comprend n élements, il s'agit donc de remplir simultanément les conditions suivantes :

$$(1.5) \qquad \sum_{i=1}^{n} \beta_2^i = 0$$

$$(1.6) \qquad \sum_{i=1}^{n} \beta_3^i = 0$$

Plusieurs groupes (ref. [3]-[7]) ont montré la possibilité de tirer parti de ces effets non linéaires, pour améliorer la performance des systèmes CPA, en équilibrant les dispersions non linéaires des différents composants du système CPA.

A ce jour, deux types d'amplificateur à fibre à dérive de fréquence à compensation non linéaires ont été publiés.

Une première technique connue sous le terme Cubicon (ref. 4) est basée sur l'amplification d'impulsions de forte asymétrie spectrale et temporelle. Des impulsions initiales provenant d'un oscillateur sont étirées temporellement dans un étireur à fibre et filtrées spectralement par un filtre spectral, de manière à obtenir des impulsions de profil spectral et temporel fortement asymétriques. Les impulsions asymétriques sont ensuite amplifiées dans un amplificateur à fibre non-linéaire puis comprimées par un compresseur à réseau. L'auto-modulation de phase introduite par la fibre amplificatrice permet de compenser la dispersion du 3ème ordre (TOD) du compresseur. Toutefois, de telles impulsions spectralement asymétriques induisent une perte de bande spectrale et la compression maximale est généralement limitée à des pulses de durée minimale d'environ 500 fs en sortie du CPA.

Une seconde technique proposée par Wise (Ref 5) consiste à utiliser les CPA en régime non linéaire, ce qui permet d'améliorer leur fonctionnement, à la condition d'être capable de compenser les non-linéarités introduites durant la propagation et l'amplification dans la fibre amplificatrice et par les dispersions de l'étireur et du compresseur.

Wise décrit essentiellement une configuration étireur à fibre, compresseur à réseau, dans laquelle la phase non-linéaire dans la fibre amplificatrice (majoritairement d'ordre 2 et 3) est compensable compte tenu du couple dispersif étireur à fibre et compresseur à réseaux utilisé.

Toutefois, dans les publications (5 à 7) le point de fonctionnement utilisé (c'est-à-dire l'énergie ou puissance crête des impulsions) correspond à une phase non linéaire très importante ($17\pi$) dans la fibre amplificatrice.

Or, une valeur de phases non linéaires aussi importante ($17\pi$) est probablement très proche du seuil au-delà duquel les effets Raman non linéaires deviennent prépondérants, et absorbent la plus grande partie de l'énergie de l'impulsion. Le laser à fibre peut devenir difficile à utiliser dans ces conditions.

En outre, il est difficile d'envisager d'utiliser un système basé sur cette structure à des énergies beaucoup plus importantes, car cela nécessiterait une longueur de fibre (dans l'étireur) plus grande, nécessitant une phase non linéaire d'autant plus importante pour un fonctionnant optimal, et des effets Raman plus gênants. Ce dispositif semble donc limité en énergie.

Dans les publications [3]-[4], le CPA est de type étireur à fibre optique et compresseur à réseau de diffraction.

Le document L. Kuznetsova et al. (ref. [5]) utilise également un étireur à fibre, et indique clairement que des étireurs à réseaux ne sont pas appropriés dans ce cas.

Dans les publications [2]-[7] on utilise toujours un étireur à fibre, pour des raisons de compacité du système et de facilité d'alignement.

Une limitation des systèmes antérieurs de CPA à compensation non linéaire est que cette compensation des effets non linéaires est généralement obtenue pour une énergie relativement limitée avec une bonne qualité d'impulsions (typiquement quelques dizaines de $\mu$J pour des impulsions d'environ 200 fs (cf [5-7])) ou à des énergies plus importantes (jusqu'à 100$\mu$J) mais avec des impulsions plus longues (typiquement > 500 fs) et de qualité discutable (cf [4]). Il est souvent difficile d'étendre l'utilisation d'un type de CPA à des énergies (ou puissances crêtes) plus élevées, tout en maintenant une qualité temporelle satisfaisante. En effet, pour obtenir une amplification à des énergies plus importantes, on augmente le facteur d'étirement (en augmentant par exemple la longueur de la fibre de l'étireur), ce qui génère plus de non-linéarités dans la fibre amplificatrice, tout en augmentant le facteur d'étirement. L'extensibilité des systèmes CPA décrits dans les références [3] à [7] pour des domaines d'énergies plus élevées n'est donc pas applicable.

Il est connu que les effets non linéaires qui s'accumulent dans un système CPA sont difficiles à compenser, car ils dépendent de très nombreux paramètres interdépendants.

L'invention permet de résoudre ces inconvénients et d'obtenir des impulsions ultra-brèves dans le domaine des femtosecondes et de puissance crête supérieure au mégawatt.

Un premier objectif de l'invention est de proposer un système amplificateur à dérive de fréquence (CPA) à compensation non linéaire utilisable à de fortes puissance crête et énergie et puissance moyenne (de l'ordre de la centaine de μJ et de quelques centaines MW crête), et capable de délivrer des impulsions fortement compressées (100 fs < durée pulse < 1 ps).

Un second objectif de l'invention est de proposer une architecture de CPA-non linéaire susceptible de fonctionner sur une gamme d'énergie élevée et avec des fibres amplificatrices de géométries diverses dans laquelle on peut ajuster les dispersions (non linéaires) d'ordre 2 et 3, tout en restant éloigné des conditions dans lesquelles les effets Raman deviennent délétères.

Selon l'invention, on a déterminé une configuration particulière de CPA qui permet de résoudre le problème de la compensation non linéaire d'ordre deux et trois tout en restant dans un domaine de propagation non linéaire éloigné du seuil des effets Raman.

Selon l'invention, le système CPA combine un étireur à réseau de diffraction et un compresseur à réseau de diffraction choisis de manière à présenter un désaccord en dispersion. De manière avantageuse, le réseau de diffraction du compresseur est plus dispersif que le réseau de diffraction de l'étireur. En outre, selon l'invention, la dispersion d'ordre 3 de l'étireur permet d'asymétriser temporellement l'impulsion, sans introduire d'asymétrie spectrale. Le désaccord d'ordre deux entre l'étireur et le compresseur est suffisamment faible pour être compensé par la phase non linéaire d'ordre deux dans la fibre amplificatrice et simultanément le désaccord d'ordre trois entre l'étireur et le compresseur est suffisamment faible pour être compensé par la phase non linéaire d'ordre trois dans la fibre amplificatrice. La phase non linéaire accumulée dans l'amplificateur à fibre optique peut ainsi être limitée en amplitude à des valeurs de l'ordre de inférieures à 10 π, qui placent bien le CPA en régime de propagation non linéaire $(\phi)_{NL}$ > 1), mais suffisamment loin des seuils des effets Raman (typiquement : $\phi_{NL}$ ~ 10-20π).

A cet effet, l'invention concerne un amplificateur à fibre à dérive de fréquence à compensation non linéaire comprenant :

- des moyens destinés à produire une impulsion lumineuse (10) de puissance crête initiale $P_0$, de durée initiale T, dont la longueur d'onde est centrée autour d'une valeur $\lambda_0$;
- un étireur apte à étirer temporellement l'impulsion;
- une fibre amplificatrice comprenant une section de fibre optique dopée couplée à des moyens de pompage optique, et apte à amplifier l'impulsion étirée pour produire une impulsion de puissance crête P ;
- un compresseur à réseau optique de diffraction apte à compresser temporellement l'impulsion amplifiée;
- l'étireur et le compresseur étant désaccordés, avec un désaccord entre les dispersions de second ordre de l'étireur $(\beta_{2E})$ et du compresseur $(\beta_{2C})$ apte à compenser la dispersion non linéaire de second ordre $(\beta_{2NL})$ dans la fibre optique amplificatrice lors de la propagation d'une impulsion de puissance crête initiale $P_0$ à travers l'amplificateur à dérive de fréquence :

$$\beta_{2E} + \beta_{2NL} + \beta_{2C} = 0.$$

Selon l'invention :

- l'étireur comporte au moins un réseau optique de diffraction dont la densité de traits est supérieure à 1200 traits/mm, et apte à présenter un coefficient $\beta_3/\beta_2$ inférieur à - 2,5 fs à la puissance $P_0$ et à la longueur d'onde $\lambda_0$, de manière à introduire une asymétrie temporelle dans l'impulsion étirée, et
- en ce que, lors de la propagation de l'impulsion de puissance crête initiale $P_0$ à travers l'amplificateur à dérive de fréquence, la fibre amplificatrice (3) présente un coefficient de dispersion non linéaire du 3ème ordre $(\beta_{3NL})$ apte à compenser la différence entre les dispersions de troisième ordre de l'étireur $(\beta_{3E})$ et du compresseur $(\beta_{3C})$ :

$$\beta_{3E} + \beta_{3NL} + \beta_{3C} = 0$$

Selon un mode de réalisation de l'invention, le réseau de diffraction du compresseur a une densité de traits supérieure à celle du réseau de l'étireur.

Avantageusement, le réseau de l'étireur est utilisé sous un angle d'incidence proche de l'angle de Littrow (pour lequel l'angle d'incidence sur le réseau et l'angle du faisceau diffracté sont les mêmes) à la longueur d'onde $\lambda_0$ mode l'impulsion.

La densité du réseau, la longueur d'onde $\lambda_0$ et l'angle d'incidence définissent le rapport $_{\beta 3}/\beta_2$. La distance entre le réseau et son image par le système optique de l'étireur définit la valeur du $_{\beta 2}$ (et ainsi également le $\beta_3$).

Selon un mode de réalisation particulier de l'invention, l'étireur comprend un réseau de diffraction apte à présenter un coefficient $\beta_3/\beta_2$ inférieur à - 2.5 fs.

Selon un mode de réalisation particulier de l'invention, le réseau de diffraction du compresseur a une densité de traits supérieure à celle du réseau de l'étireur et présente un coefficient $\beta_3/\beta_2$ inférieur à - 2.5 fs.

Selon un mode de réalisation particulier de l'invention, l'étireur comporte au moins un réseau de diffraction de densité au moins égale à 1200 traits/mm et inférieure à la densité de traits du réseau du compresseur.

Selon un mode de réalisation particulier de l'invention, le compresseur comporte au moins un réseau de diffraction de densité supérieure à 1200 traits/mm.

Selon un mode de réalisation particulier de l'invention, l'étireur comprend une paire de réseaux de diffraction.

Selon un mode de réalisation particulier de l'invention, l'étireur est du type grism et comporte au moins un prisme dispersif.

Selon un mode de réalisation particulier de l'invention, le compresseur comprend une paire de réseaux de diffraction.

Selon un mode de réalisation particulier de l'invention, le compresseur est du type grism et comporte au moins un prisme dispersif.

Selon un mode de réalisation particulier de l'invention, la fibre optique amplificatrice est une fibre photonique dopée Ytterbium, de diamètre de coeur supérieur à 20 $\mu$m et de longueur comprise entre 10 cm et quelques mètres couplée à des moyens de pompage optique.

Selon un mode particulier de l'invention, la fibre amplificatrice (3) comprend plusieurs sections de fibres optiques amplificatrices disposées en série.

Selon un mode de réalisation particulier de l'invention, l'impulsion lumineuse à amplifier :

- est une impulsion TEM$_{00}$,
- la longueur d'onde de l'impulsion est égale à 1050 nm $\pm$ 50 nm,
- la durée T de l'impulsion initiale est comprise entre 100 fs et 1 ps,
- la puissance moyenne de sortie des impulsions amplifiées est comprise entre 1 W et 1 kW, et
- la puissance crête des impulsions en sortie est comprise entre 10 MW et quelques gigawatts.

Un ou plusieurs modes de réalisation seront décrits ci-après en lien avec les figures annexées, de manière à illustrer l'invention.

La figure 1 décrit schématiquement un système amplificateur à dérive de fréquence conforme à l'invention.

La figure 2 illustre les effets non linéaires d'ordre 2 et 3 sur une impulsion ultracourte (en trait plein (a)) après propagation dans un milieu présentant respectivement une dispersion du troisième ordre uniquement (en pointillé (b)) et une dispersion de vitesse de groupe et du troisième ordre conjointement (en traits-tirets (c)).

La figure 3 illustre l'effet d'un étireur à réseau optique de diffraction sur la répartition respectivement spectrale (graphique du haut) et temporelle d'une impulsion initialement de répartition spectrale et temporelle symétrique.

La figure 4 illustre la propagation d'une impulsion étirée et asymétrisée temporellement à travers une fibre optique amplificatrice.

La figure 5 illustre le résultat d'une simulation de la propagation d'une impulsion lumineuse dans un système conforme à l'invention, avec compensation simultanée des distorsions d'ordre deux et trois.

**Description détaillée de l'invention :**

Dans le cas d'un système CPA non linéaire, les relations 1.5 et 1.6 s'expriment par:

$$(1.7) \quad \beta_{2\,etireur} + \beta_{2\,fibre} + \beta_{2\,NL} + \beta_{2\,compresseur} = 0$$

$$(1.8) \quad \beta_{3\,\text{étireur}} + \beta_{3\,\text{fibre}} + \beta_{3\,NL} + \beta_{3\,\text{compresseur}} = 0$$

Dans les CPA à compensation non linéaire de l'art antérieur, l'étireur est constitué d'une fibre optique de grande longueur.

Le tableau ci-dessous présente les signes de ces différents paramètres, dans le cas d'un étireur à fibre, utilisé dans les systèmes CPA de l'état de la technique.

|  | Etireur à Fibre | Amplificateur à fibre | Compresseur à réseau |
|---|---|---|---|
| $\beta_2$ | >0 | >0 | <0 |
| $\beta_3$ | >0 | >0 | >0 |

Dans un CPA non linéaire utilisant un étireur à fibre, la combinaison d'un étireur à fibre et d'un compresseur désaccordés permet de compenser les dispersions non linéaires d'ordre deux et trois accumulées dans la fibre amplificatrice. Il faut pour cela choisir des composants étireur et compresseur tels que le désaccord d'ordre deux soit compensé par celui de la fibre, et ajuster la puissance pour que le désaccord d'ordre 3 entre l'étireur à fibre et le compresseur à réseau soit compensé par la phase non linéaire d'ordre 3 accumulée dans la fibre amplificatrice.

Toutefois, on observe que lorsque le désaccord d'ordre deux est quasiment compensé, le désaccord d'ordre trois entre un étireur à fibre et un compresseur à réseau est important, ce qui nécessite une compensation à des phases non linéaires d'ordre 3 élevées ($17\pi$ dans la publication [5]).

Au contraire, selon l'invention, l'étireur comprend un réseau optique de diffraction. Dans le cadre de l'invention, on a mis en évidence qu'une architecture particulière de CPA conforme à l'invention basée sur un étireur à réseau de diffraction n'est pas équivalente à une architecture de CPA à base de fibre optique. En effet, le tableau ci-dessous présente les signes pour les différents paramètres $\beta_2$ et $\beta_3$, dans le cas d'un étireur à réseau de diffraction, sans tenir compte des non linéarités dans l'amplificateur.

|  | Etireur à réseau | Amplificateur à fibre | Compresseur à réseau de diffraction |
|---|---|---|---|
| $\beta_2$ | >0 | >0 | <0 |
| $\beta_3$ | <0 | >0 | >0 |

Le tableau ci-dessous présente les ordres de grandeur de $\beta_2$ et $\dfrac{\beta_3}{\beta_2}$ pour quelques cas particuliers.

| Composant | $\beta_2$ (fs)$^2$ | $\dfrac{\beta_3}{\beta_2}$ (fs) |
|---|---|---|
| Etireur à réseau (1750 tr/mm configuration de Littrow et Z ~ 0.09 m) | 6.560.000 | -15,8 fs |
| Etireur à fibre (L ~ 400 m) | 6.560.000 | 2,7 fs |
| Amplificateur à fibre (L~1 m) | 16.400 | 2,7 fs |
| Compresseur à réseau | -6.560.000 | -15,8 fs |

Les effets non linéaires se traduisent par une phase spectrale additionnelle, qui apparaît lors de l'amplification dans l'amplificateur à fibre, et sont principalement dus à l'automodulation de phase (SPM, Self Phase Modulation). Cette phase spectrale se décompose également en série de Taylor, selon les paramètres $\beta_{2NL}$ et $\beta_{3NL}$.

Le paramètre $\beta_{2\,\text{fibre}}$, lié à la dispersion dans la fibre amplificatrice, est en général très petit devant les paramètres $\beta_2$ de l'étireur et du compresseur, et peut être négligé. Il en est de même en ce qui le paramètre $\beta_{3\,\text{fibre}}$, et les relations (1.7) et (1.8) peuvent alors s'écrire :

$$(1.9) \qquad \beta_{2\,NL} = -\beta_{2\,compresseur} - \beta_{2\,étireur}$$

$$(1.10) \qquad \beta_{3\,NL} = -\beta_{3\,compresseur} - \beta_{3\,étireur}$$

Lors de la conception d'un système CPA, utilisant un étireur à réseau de diffraction et un compresseur à réseau de diffraction, il est possible de remplir la condition (1.9), notamment avec des réseaux de densité de traits différents, et donc de paramètres $\beta_3/\beta_2$ différents. Par ailleurs, pour une densité de traits donnée dans les réseaux de l'étireur ou du compresseur, le paramètre $\beta_2$ peut également être ajusté en changeant la distance entre les réseaux.

Si la condition (1.9) peut être remplie en ajustant les paramètres de l'étireur et du compresseur (densité de traits sur les réseaux, distance entre réseaux), il n'en est pas de même pour la condition (1.10). Les paramètres $\beta_{2NL}$ et $\beta_{3NL}$ de la fibre ne sont en effet pas indépendants. En effet, si la condition (1.9) est vérifiée, le paramètre $\beta_{3NL}$ de la fibre est en général dans ce cas trop faible.

Pour remplir simultanément les conditions (1.9) et (1.10), il convient alors d'optimiser le rapport $\left|\dfrac{\beta_{3NL}}{\beta_{2NL}}\right|$ de la fibre, ainsi que décrit dans le paragraphe ci-dessous.

Pour une dispersion donnée, l'effet de l'automodulation de phase sur une impulsion temporellement asymétrique conduit à un paramètre $\beta_{3NL}$ plus important, et donc à une augmentation du rapport $\dfrac{\beta_{3NL}}{\beta_{2NL}}$. Or, selon l'invention, dans un étireur à réseau présentant un rapport $\beta_3/\beta_2$ adéquat, l'impulsion étirée présente un spectre symétrique, mais une asymétrie temporelle.

L'augmentation du rapport $\dfrac{\beta_{3NL}}{\beta_{2NL}}$ est liée à l'asymétrie temporelle de l'impulsion. La compensation des effets non linéaires dans le dispositif de l'invention a lieu pour un point de fonctionnement en énergie donné. Le processus d'optimisation des compensations de 2$^{nd}$ et de 3$^{ème}$ ordre est un processus itératif lors de la conception du système.

Dans le cadre de l'invention, on a premièrement mis en évidence que le paramètre $\beta_{3NL}$ dépend non seulement de l'amplitude de l'impulsion en sortie de l'étireur, mais aussi de la forme symétrique ou asymétrique du profil temporel de cette impulsion. En effet, comme l'indice $n(\omega)$ dépend de l'intensité $I(\omega)$, il va dépendre de la forme temporelle de l'impulsion, donc la phase varie en fonction de la forme de l'impulsion.

De plus, la forme de l'impulsion évolue au cours de l'amplification dans la fibre.

Selon l'invention, on a ensuite mis en évidence la propriété d'un étireur à réseau à asymétriser temporellement une impulsion de manière plus importante qu'un étireur à fibre, sans nécessairement introduire d'asymétrie spectrale.

Une impulsion temporellement asymétrique peut être obtenue lorsqu'une impulsion ultracourte limitée par transformée de Fourier est soumise à l'effet conjoint de la dispersion de vitesse de groupe et du troisième ordre de dispersion.

A noter que, dans le cas d'un étireur à fibre, le rapport $\left|\dfrac{\beta_3}{\beta_2}\right|$ est plus petit que celui d'un étireur à réseau de densité de traits supérieure 1200 tr/mm utilisé proche de l'angle d'incidence de Littrow. Dans ce cas, si le spectre est symétrique, l'impulsion ultrabrève est étirée, mais reste quasiment symétrique. Pour obtenir une forme temporelle asymétrique avec un étireur à fibre, il est nécessaire d'étirer une impulsion de spectre asymétrique ou bien d'asymétriser le spectre après étirement, par exemple au moyen d'un filtre (ref. 4). Cette technique conduit à une coupure du spectre de l'impulsion, et donc à une limitation sur la durée minimale de l'impulsion comprimée.

A dispersion identique, un étireur à fibre introduira donc beaucoup moins de dispersion du troisième ordre qu'un étireur à réseau. Les effets non linéaires utilisés pour la compensation de la dispersion du troisième ordre croissent avec l'intensité de l'impulsion lumineuse amplifiée. La compensation de la dispersion du troisième ordre par les effets non linéaires dans la fibre se fera donc à un niveau d'intensité moindre pour un étireur à fibre que pour un étireur à réseau.

Pour une dispersion donnée, un système CPA conforme à l'invention avec un étireur à réseau de diffraction permet de compenser les effets non linéaires à une énergie plus élevée qu'avec un système CPA comprenant un étireur à fibre optique.

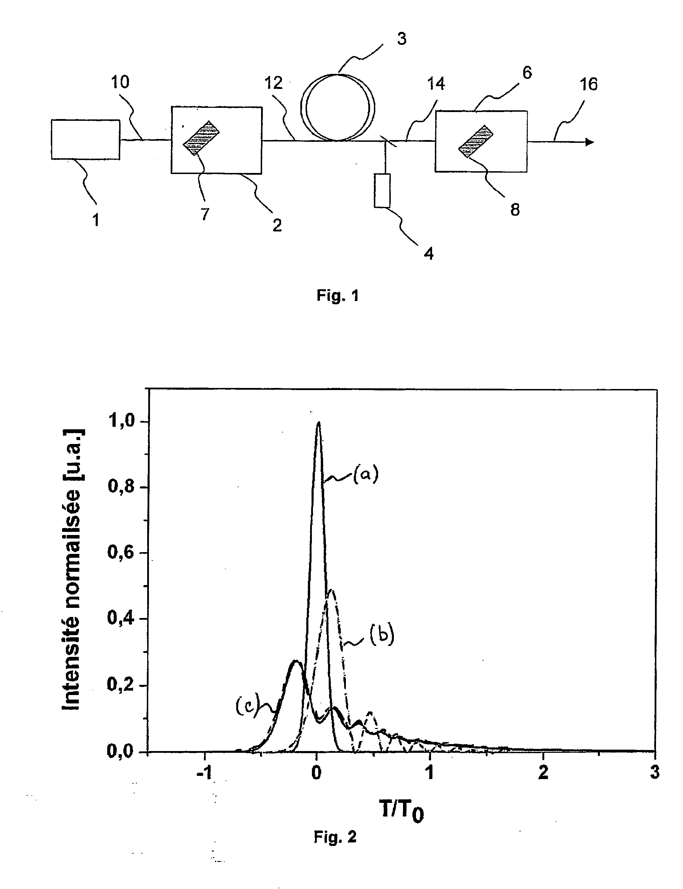

La figure 1 décrit un système amplificateur à dérive de fréquence et à compensation non linéaire selon le mode de réalisation préféré de l'invention.

L'impulsion à amplifier (10) provient d'un oscillateur (5) femtoseconde Ytterbium, délivrant des impulsions limitées par Fourier, à une longueur d'onde centrale de 1030 nm, d'énergie supérieure à 20 nJ à une cadence de 50 MHz. La durée d'impulsion est d'environ 100 fs et la largeur spectrale de 11.2 nm. La cadence de répétition peut si nécessaire être ensuite réduite dans un sélecteur d'impulsion utilisant un modulateur Acousto-Optique.

L'étireur (2) utilise une paire de réseaux de diffraction (7) en transmission, de pas 1500 traits/mm, à un angle proche de l'angle de Littrow. Pour une distance équivalente entre réseaux d'environ 10 cm, l'impulsion initiale est étirée à une durée d'environ 130 ps à mi-hauteur. Cette valeur n'est pas limitative et dépend de la condition du système. Elle peut varier entre 1 ps et 2 ns.

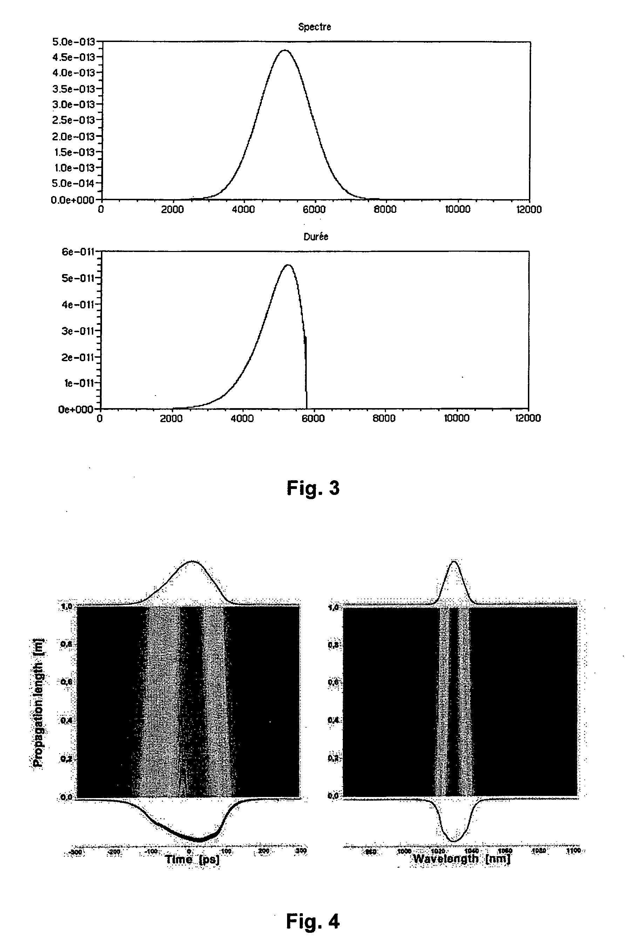

Après l'étireur (2), il est important de noter que la forme temporelle de l'impulsion n'est plus symétrique, du fait de la dispersion d'ordre 3 induite dans l'étireur (cf figure 3).

L'amplification a ensuite lieu dans une fibre photonique (3) de grand diamètre de coeur, typiquement 80 $\mu$m (diamètre de mode environ 70 $\mu$m), pompée par une diode laser fibrée (4) émettant à 976 nm. L'énergie amplifiée (14) est de l'ordre de 100 $\mu$J. Une telle fibre présente une non linéarité relativement faible ($\gamma\sim$ 5.10$^{-5}$ W$^{-1}$.m$^{-1}$) Cependant, du fait de l'énergie élevée, les effets non-linéaires, et notamment l'auto-modulation de phase, doivent être pris en compte. L'automodulation de phase, agissant sur une impulsion de forme temporelle asymétrique, est ainsi le principal facteur conduisant à la compensation temporelle après compression (cf figure 4).

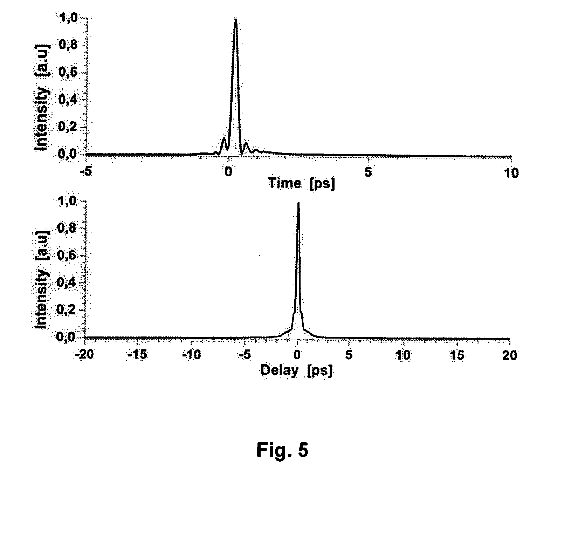

L'impulsion amplifiée (14) est ensuite recomprimée dans un compresseur (6) à réseau optique de diffraction (8), utilisant également une paire de réseaux de diffraction en transmission sous une incidence proche de l'angle de Littrow, avec une densité de traits de 1750 traits par mm. L'efficacité de compression est généralement supérieure à 70% (cf figure 5, la fonction d'autocorrélation de l'impulsion en sortie).

L'impulsion amplifiée en sortie (cf figure 5) ne présente pas de distorsions non linéaires produisant des rebonds d'ordre deux ni trois.

Pour plus de flexibilité dans la conception du système, il est possible de remplacer les réseaux (7) de l'étireur par une configuration hybride utilisant des réseaux et prismes (ou grism). Une telle configuration permet plus aisément d'ajuster de façon indépendante les paramètres $\beta_2$ et $\beta_3$ de l'étireur.

En résumé, l'invention concerne une source d'impulsions lumineuses ultrabrèves de forte puissance. Elle utilise une architecture de type CPA, comprenant un étireur à réseau optique de diffraction, un amplificateur à fibre dopée et un compresseur à réseau optique de diffraction. Cette architecture est optimisée pour que les effets non linéaires dans la fibre optique compensent les termes résiduels de déphasage d'ordre 2 et d'ordre 3. Elle permet d'utiliser un spectre symétrique, et l'asymétrie temporelle nécessaire à la compensation est naturellement produite dans l'étireur. Elle ne met pas en oeuvre de technique de filtrage spectral, qui limite la durée minimale de l'impulsion comprimée. Elle peut également utiliser la technique d'amplification au delà de la bande de gain décrite dans [9] D. Papadopoulos et al. "Generation of 63 fs 4.1 MW peak power pulses from a parabolic fiber amplifier operated beyond the gain bandwidth limit," Opt. Lett. 32, 2520-2522 (2007).

Par rapport aux techniques décrites ref. 3-7 utilisant un étireur à fibre, l'invention permet d'amplifier des impulsions d'énergie incidente plus élevée, ce qui peut être avantageux dans certaines configurations. Elle présente une flexibilité plus importante, du fait de faire varier dans une certaine mesure les dispersions des troisième et deuxième ordres dans l'étireur et le compresseur à réseau. Cette flexibilité peut être encore augmentée par l'utilisation de techniques hybrides de type "grism" ([8] Y. Zaouter et al., "Third-order spectral phase compensation in parabolic pulse compression," Opt. Express 15, 9372-9377 (2007)).

L'invention utilise les effets non linéaires pour obtenir des énergies plus importantes qu'avec un étireur à fibre.

L'utilisation d'un étireur à réseau de diffraction dans le système CPA non linéaire de l'invention n'augmente pas sensiblement l'encombrement global du système. En effet, la compacité globale d'un système CPA est limitée par la compacité du compresseur à réseau de diffraction, utilisé dans tous les systèmes. Par ailleurs, l'alignement du compresseur à réseau de diffraction étant connu de l'homme du métier, l'alignement d'un étireur à réseau de diffraction ne pose pas de difficulté supplémentaire.

**Revendications**

1.  Amplificateur à fibre à dérive de fréquence (1) à compensation non linéaire comprenant :

    - des moyens (5) destinés à produire une impulsion lumineuse (10) de puissance crête initiale $P_0$, de durée initiale T, dont la longueur d'onde est centrée autour d'une valeur $\lambda_0$;
    - un étireur (2) apte à étirer temporellement l'impulsion (10) ;

- une fibre amplificatrice (3) comprenant une section de fibre optique dopée couplée à des moyens de pompage optique (4), et apte à amplifier l'impulsion étirée (12) pour produire une impulsion de puissance crête P ;
- un compresseur (6) à réseau optique de diffraction (8) apte à compresser temporellement l'impulsion amplifiée (14) ;
- l'étireur (2) et le compresseur (6) étant désaccordés, avec un désaccord entre les dispersions de second ordre de l'étireur ($\beta_{2E}$) et du compresseur ($\beta_{2C}$) apte à compenser la dispersion non linéaire de second ordre ($\beta_{2NL}$) dans la fibre optique amplificatrice (3) lors de la propagation d'une impulsion de puissance déterminée à travers l'amplificateur à dérive de fréquence :

$$\beta_{2E} + \beta_{2NL} + \beta_{2C} = 0$$

et **caractérisé en ce que** :

- l'étireur (2) comporte au moins un réseau optique de diffraction (7) dont la densité de traits est supérieure à 1200 traits/mm, et apte à présenter un coefficient $\beta_3/\beta_2$ inférieur à - 2,5 fs à la puissance $P_0$ et à la longueur d'onde $\lambda_o$, de manière à introduire une asymétrie temporelle dans l'impulsion étirée,
- et **en ce que**, lors de la propagation de l'impulsion de puissance crête initiale $P_0$ la fibre amplificatrice (3) présente un coefficient de dispersion non linéaire du 3ème ordre ($\beta_{3NL}$) apte à compenser la différence entre les dispersions de troisième ordre de l'étireur ($\beta_{3E}$) et du compresseur ($\beta_{3C}$) :

$$\beta_{3E} + \beta_{3NL} + \beta_{3C} = 0$$

**2.** Amplificateur à fibre (1) selon la revendication 1, **caractérisé en ce que** : le réseau de diffraction (8) du compresseur (6) a une densité de traits supérieure à celle du réseau (7) de l'étireur (2).

**3.** Amplificateur à fibre selon la revendication 1 ou 2, **caractérisé en ce que** : le compresseur (6) comporte au moins un réseau de diffraction (8) de densité supérieure à 1200 traits/mm.

**4.** Amplificateur à fibre selon l'une des revendications 1 à 3, **caractérisé en ce que** : l'étireur (2) comporte au moins un réseau de diffraction (7) de densité au moins égale à 1200 traits/mm et inférieure à la densité de traits du réseau du compresseur.

**5.** Amplificateur à fibre selon l'une des revendications 1 à 4, **caractérisé en ce que** : l'étireur (2) comprend une paire de réseaux de diffraction (7).

**6.** Amplificateur à fibre selon l'une des revendications 1 à 5, **caractérisé en ce que** : l'étireur (2) est du type grism et comporte au moins un prisme dispersif.

**7.** Amplificateur à fibre selon l'une des revendications 1 à 6, **caractérisé en ce que** : le compresseur (6) comprend une paire de réseaux de diffraction (8).

**8.** Amplificateur à fibre selon l'une des revendications 1 à 7, **caractérisé en ce que** : le compresseur (6) est du type grism et comporte au moins un prisme dispersif.

**9.** Amplificateur à fibre selon l'une des revendications 1 à 8, **caractérisé en ce que** : la fibre optique amplificatrice (3) est une fibre dopée Ytterbium, de diamètre de coeur supérieur à 20 $\mu$m et dont la longueur est comprise entre 10 cm et quelques mètres couplée à des moyens de pompage optique.

**10.** Amplificateur à fibre selon l'une des revendications 1 à 8, **caractérisé en ce que** : la fibre amplificatrice (3) comprend plusieurs sections de fibres optiques amplificatrices disposées en série.

**11.** Amplificateur à fibre selon l'une des revendications 1 à 10, **caractérisé en ce que** :

- l'impulsion initiale est une impulsion $TEM_{00}$,

- la longueur d'onde de l'impulsion est égale à 1050 nm $\pm$ 50 nm,
- la durée T de l'impulsion initiale est comprise entre 100 fs et 1 ps,
- la puissance moyenne de sortie des impulsions amplifiées est comprise entre 1W et 1kW, et
- la puissance crête des impulsions en sortie est comprise entre 10 MW et quelques gigawatts.

**Claims**

1. Chirped pulse fiber amplifier (1) with nonlinear compensation, comprising

   - means (5) for producing a light pulse (10) of initial peak-power $P_0$, initial duration T, and the wavelength of which is centred about a value $\lambda_0$;
   - a stretcher (2) suitable for temporally stretching the pulse (10);
   - an amplifying fiber (3) comprising a doped optical fiber section coupled to optical pumping means (4), and suitable for amplifying the stretched pulse (12) so as to produce a pulse of peak-power P;
   - an optical diffraction grating compressor (6) suitable for temporally compressing the amplified pulse (14);
   - the stretcher (2) and the compressor (6) being mismatched, with a mismatch between the second-order dispersions of the stretcher ($\beta_{2E}$) and of the compressor ($\beta_{2C}$) suitable for compensating the second-order nonlinear dispersion ($\beta_{2NL}$) in the amplifying optical fiber (3) during the propagation of a pulse of determined power through the chirped pulse amplifier:

$$\beta_{2E} + \beta_{2NL} + \beta_{2C} = 0$$

   and **characterized in that**:

   - the stretcher (2) comprises at least one optical diffraction grating (7), having a grating line density greater than 1200 lines/mm, and which is suitable for having a coefficient $\beta_3/\beta_2$ lower than -2.5 fs at the power $P_0$ and the wavelength $\lambda_0$, so as to introduce a temporal asymmetry in the stretched pulse, and
   - **in that**, during the propagation of the pulse of initial peak-power $P_0$ through the chirped pulse amplifier, the amplifying fiber (3) has a coefficient of third-order nonlinear dispersion ($\beta_{3NL}$) suitable for compensating the difference between the third-order dispersions of the stretcher ($\beta_{3E}$) and of the compressor ($\beta_{3C}$):

$$\beta_{3E} + \beta_{3NL} + \beta_{3C} = 0.$$

2. Fiber amplifier (1) according to claim 1, **characterized in that**: the diffraction grating (8) of the compressor (6) has a line density higher than that of the grating (7) of the stretcher (2).

3. Fiber amplifier according to claim 1 or 2, **characterized in that**: the compressor (6) comprises at least one diffraction grating (8) having a line density higher than 1200 lines/mm.

4. Fiber amplifier according to one of claims 1 to 3, **characterized in that**:

   the stretcher (2) comprises at least one diffraction grating (7) having a density at least equal to 1200 lines/mm and lower than the line density of the compressor grating.

5. Fiber amplifier according to one of claims 1 to 4, **characterized in that**:

   the stretcher (2) comprises a pair of diffraction gratings.

6. Fiber amplifier according to one of claim 1 to 5, **characterized in that**:

   the stretcher (2) is of the grism type and comprises at least one dispersive prism.

**7.** Fiber amplifier according to one of claims 1 to 6, **characterized in that**:

the compressor (6) comprises a pair of diffraction gratings (8).

**8.** Fiber amplifier according to one of claim 1 to 7, **characterized in that**:

the compressor (6) is of the grism type and comprises at least one dispersive prism.

**9.** Fiber amplifier according to one of claims 1 to 8, **characterized in that**:

the amplifying optical fiber (3) is an Ytterbium-doped fiber, with a core diameter greater than 20 $\mu$m and a length comprised between 10 cm and a few meters, coupled to optical pumping means.

**10.** Fiber amplifier according to one of claims 1 to 8, **characterized in that**: the amplifying fiber (3) comprises several amplifying optical fiber sections arranged in series.

**11.** Fiber amplifier according to one of claims 1 to 10, **characterized in that**:

- the initial pulse is a $TEM_{00}$ pulse,
- the wavelength of the pulse is equal to 1050 nm $\pm$ 50 nm,
- the duration T of the initial pulse is comprised between 100 fs and 1 ps,
- the output mean-power of the amplified pulses is comprised between 1 W and 1kW, and
- the output peak-power of the pulses is comprised between 10 MW and a few gigawatts.

**Patentansprüche**

**1.** Frequenzdrift-Faserverstärker (1) mit nichtlinearer Kompensation, der Folgendes umfasst:

- Mittel (5), die dazu bestimmt sind, einen Lichtimpuls (10) mit einer Ausgangsspitzenleistung $P_0$ mit einer Ausgangsdauer T zu erzeugen, dessen Wellenlänge um einen Wert $\lambda_0$ zentriert ist;
- einen Dehner (2), der dazu geeignet ist, den Impuls (10) zeitlich zu dehnen;
- eine Verstärkungsfaser (3), die einen dotierten Glasfaserabschnitt umfasst, der an optische Pumpmittel (4) gekoppelt ist, und dazu geeignet ist, den gedehnten impuls (12) zu verstärken, um einen Impuls mit einer Spitzenleistung P zu erzeugen;
einen Kompressor (6) mit optischem Beugungsgitter (8), der dazu geeignet ist, den verstärkten impuls (14) zeitlich zu komprimieren;
- wobei der Dehner (2) und der Kompressor (6) mit einer Verstimmung zwischen den Dispersionen zweiter Ordnung des Dehners ($\beta_{2E}$) und des Kompressors ($\beta_{2C}$) verstimmt sind, die dazu geeignet ist, die nichtlineare Dispersion zweiter Ordnung ($\beta_{2NL}$) in der Verstörkungsglastaser (3) bei der Ausbreitung eines Impulses mit einer bestimmten Leistung durch den Frequenzdriftverstärker zu kompensieren:

$$\beta_{2E} + \beta_{2NL} + \beta_{2C} = 0$$

und **dadurch gekennzeichnet, dass**:

- der Dehner (2) mindestens ein optisches Beugungsgitter (7) umfasst, dessen Liniendichte größer ist als 1200 Linien/mm, und dazu geeignet ist, einen Koeffizienten $\beta_3/\beta_2$ aufzuweisen, der bei der Leistung $P_0$ und bei der Wellenlänge $\lambda_0$ niedriger ist alls - 2,5 fs, derart, dass eine zeitliche Asymmetrie in den gedehnten Impuls eingeführt wird,
- und **dadurch**, dass die Verstärkungsfaser (3) bei der Ausbreitung des impulses mit der Ausgangsspitzenleistung $P_0$ einen nichtlinearen Dispersionskoeffizienten dritter Ordnung ($\beta_{3NL}$) aufweist, der dazu geeignet ist, die Differenz zwischen den Dispersionen dritter Ordnung des Dehners ($\beta_{3E}$) und des Kompressors ($\beta_{3C}$) zu kompensieren:

$$\beta_{3E} + \beta_{3NL} + \beta_{3C} = 0$$

2.  Faserverstärker (1) nach Anspruch 1, **dadurch gekennzeichnet, dass**: das Beugungsgitter (8) des Kompressors (6) eine Liniendichte aufweist, die größer ist als diejenige des Gitters (7) des Dehners (2).

3.  Faserverstärker nach Anspruch 1 oder 2, **dadurch gekennzeichnet, dass**:

    der Kompressor (6) mindestens ein Beugungsgitter (8) mit einer Dichte von mehr als 1200 Linien/mm umfasst.

4.  Faserverstärker nach einem der Ansprüche 1 bis 3, **dadurch gekennzeichnet, dass**: der Dehner (2) mindestens ein Beugungsgitter (7) mit einer Dichte von mindestens 1200 Linien/mm umfasst und die kleiner ist als die Liniendichte des Kompressors.

5.  Faserverstärker nach einem der Ansprüche 1 bis 4, **dadurch gekennzeichnet, dass**: der Dehner (2) ein Paar Beugungsgitter (7) umfasst.

6.  Faserverstärker nach einem der Ansprüche 1 bis 5, **dadurch gekennzeichnet, dass**: der Dehner (2) vom Typ Gitterprisma ist und mindestens ein Dispersionsprisma umfasst.

7.  Faserverstärker nach einem der Ansprüche 1 bis 6, **dadurch gekennzeichnet, dass**; der Kompressor (6) ein Paar Beugungsgitter (8) umfasst.

8.  Faserverstärker nach einem der Ansprüche 1 bis 7, **dadurch gekennzeichnet, dass**: der Kompressor (6) vom Typ Gitterprisma ist und mindestens ein Dispersionsprisma Umfasst.

9.  Faserverstärkter nach einem der Ansprüche 1 bis 8, **dadurch gekennzeichnet, dass**: die Verstärkungsgiasfaser (3) eine Ytterbiumdotierte Faser mit einem Kerndurchmesser ist, der größer als 20 $\mu$m ist, deren Länge zwischen 10 cm und einigen Metern enthalten ist, die an optische Pumpmittel gekoppelt ist.

10. Faserverstärker nach einem der Ansprüche 1 bis 8, **dadurch gekennzeichnet, dass**: die Verstärkungsfaser (3) mehrere in Reihe angeordnete Verstärkungsglasfaserabschnitte umfasst.

11. Faserverstärker nach einem der Ansprüche 1 bis 10, **dadurch gekennzeichnet, dass**:

    - der Ausgangsimpuls ein $TEM_{00}$-Impuls ist,
    - die Wellenlänge des Impulses gleich 1050 nm $\pm$50 nm ist,
    - die Dauer T des Ausgangsimpulses zwischen 100 fs und 1 ps enthalten ist,
    - die mittlere Ausgangsleistung der verstärkten Impulse zwischen 1 W und 1 kW enthalten ist, und
    - die Spitzenleistung der Ausgangsimpulse zwischen 10 MW und einigen Gigawatt enthalten ist.

**Fig. 1**

**Fig. 2**

**Fig. 3**

**Fig. 4**

**Fig. 5**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 0550344
- FR 0755798

**Littérature non-brevet citée dans la description**

- **J. Limpert et al.** High-power rod-type photonic crystal fiber laser. *Opt. Express,* 2005, vol. 13, 1055-1058
- **D. Strickland et al.** Compression of amplified chirped optical pulses. *Opt. Comm.,* 1985, vol. 56, 219-221
- High Energy Fiber Chirped Pulse Amplification System based on Cubicons. **Z. Liu et al.** Conference on Lasers and Electro-Optics/Quantum Electronics and Laser Science and Photonic Applications Systems Technologies, Technical Digest (CD). Optical Society of America, 2005
- **L. Shah et al.** High energy femtosecond Yb cubicon fiber amplifier. *Opt. Express,* 2005, vol. 13, 4717-4722
- **S. Zhou et al.** Compensation of nonlinear phase shifts with third-order dispersion in short-pulse fiber amplifiers. *Opt. Express,* 2005, vol. 13, 4869-4877
- **L. Kuznetsova et al.** Scaling of femtosecond Yb-doped fiber amplifiers to tens of microjoule pulse energy via nonlinear chirped pulse amplification. *Opt. Lett.,* 2007, vol. 32, 2671-2673
- **A. Chong et al.** Theoretical optimization of nonlinear chirped-pulse fiber amplifiers. *J. Opt. Soc. Am. B,* 2007, vol. 24, 1815-1823
- **Y. Zaouter et al.** Third-order spectral phase compensation in parabolic pulse compression. *Opt. Express,* 2007, vol. 15, 9372-9377
- **D. Papadopoulos ; Y. Zaouter ; M. Hanna ; F. Druon ; E. Mottay ; E. Cormier ; P. Georges.** Génération of 63 fs 4.1 MW peak power pulses from a parabolic fiber amplifier operated beyond the gain bandwidth limit. *Opt. Lett.,* 2007, vol. 32, 2520-2522
- **Y. Zaouter ; D. N. Papadopoulos ; M. Hanna ; J. Boullet ; L. Huang ; C. Aguergaray ; F. Druon ; E. Mottay ; P. Georges ; E. Cormier.** Stretcher-free high energy nonlinear amplification of femtosecond pulses in rod-type fibers. *Opt. Lett.,* 2008, vol. 33, 107-109
- **D. Papadopoulos et al.** Generation of 63 fs 4.1 MW peak power pulses from a parabolic fiber amplifier operated beyond the gain bandwidth limit. *Opt. Lett.,* 2007, vol. 32, 2520-2522